# EUROPEAN PATENT SPECIFICATION

(11) **EP 2 083 603 B1**
(45) Date of publication and mention of the grant of the patent: **23.02.2011**
(21) Application number: 09000975.4
(22) Date of filing: 23.01.2009
(51) Int. Cl.: H04W 74/04

(54) **Communication device**
Kommunikationsvorrichtung
Dispositif de communication

(30) Priority: 25.01.2008 JP 2008015568
(43) Date of publication of application: 29.07.2009
(73) Proprietor: Kabushiki Kaisha Toyota Chuo Kenkyusho, Aichi-Gun Aichi 480-1192 (JP)
(72) Inventor: Ito, Kenji, Aichi-gun Aichi-ken 480-1192 (JP); Suzuki, Noriyoshi, Aichi-gun Aichi-ken 480-1192 (JP); Tadokoro, Yukihiro, Aichi-gun Aichi-ken 480-1192 (JP); Imai, Junji, Aichi-gun Aichi-ken 480-1192 (JP)
(74) Representative: Kramer - Barske - Schmidtchen

(56) References cited:
- EP-A- 1 764 961
- GUANGHONG WANG ET AL: "Improving DCF in IEEE 802.11 wireless LAN" CCECE 2003. CANADIAN CONFERENCE ON ELECTRICAL AND COMPUTER ENGINEERING . MONTREAL, CANADA, MAY 4 - 7, 2003; [CANADIAN CONFERENCE ON ELECTRICAL AND COMPUTER ENGINEERING], NEW YORK, NY : IEEE, US, vol. 2, 4 May 2003 (2003-05-04), pages 919-922, XP010654220 ISBN: 978-0-7803-7781-3
- LI B ET AL: "A New Collision Resolution Mechanism to Enhance the Performance of IEEE 802.11 DCF" IEEE TRANSACTIONS ON VEHICULAR TECHNOLOGY, IEEE SERVICE CENTER, PISCATAWAY, NJ, US, vol. 53, no. 4, 1 July 2004 (2004-07-01), pages 1235-1246, XP011115410 ISSN: 0018-9545
- QIANG NI: "Performance analysis and enhancements for IEEE 802.11e wireless networks" IEEE NETWORK, IEEE SERVICE CENTER, NEW YORK, NY, US, vol. 19, no. 4, 1 July 2005 (2005-07-01), pages 21-27, XP011136604 ISSN: 0890-8044

## Description

### BACKGROUND

### Technical Field

The present invention relates to a communication device.

### Related Art

The present invention supposes a system that conveys information by individual wireless terminal devices broadcast communicating (broadcasting) to wireless terminal devices at the periphery without a control station such as a base station or the like. As an example of realizing such a form of communications, in a CSMA (Carrier Sense Multiple Access) system that is one communications system used in wireless LANs, a terminal that wishes to transmit data (a node) monitors the packet communication statuses of other terminals (carrier sensing), and starts transmission at a timing when a channel is free.

In such a wireless system, terminal A for example monitors, by carrier sensing, the communication statuses of terminals that exist within a range that radio waves reach at the periphery of itself.

Therefore, if numerous other terminals exist at the periphery, there are cases in which the timing for transmitting its own data cannot be obtained and transmission of the data is greatly delayed. Thus, there is the problem that reliability cannot be ensured in cases in which the number of terminals or communications traffic increases.

Further, if numerous other terminals exist at a place that is outside of the range that the radio waves reach and where carrier sensing cannot be directly carried out, the communication statuses of these terminals cannot be detected, and cases arise in which, when terminal. A transmits its own data, it collides with the communication of another terminal (the so-called hidden terminal problem). Wireless LANs have a means for avoiding this colliding of communications by using a system called RTS/CTS (Request To Send/Clear To Send). This system is effective in cases in which it is desired to communicate with a specific terminal, but cannot be applied to cases of broadcast communications. Therefore, there is the problem that the above-described collision of packet communications cannot be avoided.

Thus, in order to overcome the above-described problems, there has been proposed a method of accessing by time-dividing a frame into n slots (refer to Japanese Patent Application Laid-Open (JP-A) No. 2007-28550). The wireless terminal device of this patent document monitors occupancy information of slots in units of frames, and exchanges information with other terminals by embedding, in a transmission packet, occupancy information of the slots in addition to the transmission data of the device. The frame is structured by, for example, 100 ms, and each slot is occupied by a respectively different terminal.

The wireless terminal device of the above-described patent document transmits a packet that includes data and frame information (FI), as illustrated in Fig. 2 of that document. The frame information is information expressing the occupancy states of all of the slots that are detected at the device. Because this frame information is needed for each packet, the amount of data that is the object of transmission and that occupies one packet cannot be made to be large, and there is the concern that communications traffic will be delayed.

Further, in the above-described patent document, although the peripheral terminals of the device are detected, there exist other terminals (so-called hidden terminals) that are detected at the peripheral terminals of the device but are not detected at the device. Thus, in the above-described patent document, an algorithm that detects hidden terminals is disclosed. However, because this is premised on the existence of frame information, as described above, the amount of data that is the object of transmission and that occupies one packet cannot be made to be large. On the other hand, if frame information is not used, hidden terminals are not detected, and therefore, the problem of packet collision with hidden terminals arises.

GUANGHONG WANG ET AL:"Improving DCF in IEEE802.11 wireless LAN"CCECE 2003; CANADIAN CONFERENCE ON ELECTRICAL AND COMPUTER ENGINEERING; MONTREAL, CANADA, MAY 4-7, 2003; NEW YORK, NY: IEEE, US, VOL.2, 4 MAY 2003 (2003-05-04), pages 919-922,XP010654220 ISBN:978-0-7803-7781-3 discloses access methods based on carrier sense multiple access (CSMA/CA) with collision avoidance by using a NAV (network allocation vector) relating to a time during which transmitting of data is prohibited.

### SUMMARY

The present invention is proposed in order to overcome the above-described problems, and an object thereof is to provide a communication device that can suppress collision of packets and improve communication performance.

An aspect of the present invention provides a communication device including: receiving means for receiving a data packet and reply packets that are transmitted from other terminals; transmitting means for, when the data packet is detected by the receiving means, transmitting, after a predetermined time period, a reply packet expressing results of detection of the data packet received from one of the other terminals; transmission prohibited period setting means for, when the reply packets are received by the receiving means, setting as a transmission timing prohibited period of a data packet of the communication device itself, a predetermined period from a reception timing of the reply packets that are received to an end of the predetermined period after a basic transmission cycle of the communication device itself passes; and said transmitting means for transmitting a data packet of the communication device itself, at a timing other than the transmission timing prohibited period set by the transmission prohibited period setting means.

### BRIEF DESCRIPTION OF THE DRAWINGS

Exemplary embodiments of the present invention will be described in detail based on the following figures, wherein:
Fig. 1 is a block diagram showing the structure of a communication device of a wireless communications network relating to a first exemplary embodiment of the present invention;
Fig. 2 is a drawing showing the structure of a basic transmission cycle that is transmitted and received by the communication device;
Fig. 3 is a state transition drawing of the communication device;
Fig. 4 is a flowchart showing the processing routine of "data packet transmitting processing";
Fig. 5 is a flowchart showing the processing routine of "processing of receiving reply packets to data of the communication device";
Fig. 6 is a timing chart for explaining a transmission prohibited period;
Fig. 7 is a flowchart showing the processing routine of "signal receiving processing";
Fig. 8 is a timing chart for explaining the transmission prohibited period;
Fig. 9 is a flowchart showing the processing routine of "reply packet transmitting processing";
Fig. 10 is a timing chart for explaining the transmission prohibited period;
Fig. 11A is a drawing showing detection information of a reception detection packet and a collision detection packet in a case in which a data packet of another terminal can be received at the communication device and there is no collision of data packets;
Fig. 11B is a drawing showing detection information of a reception detection packet and a collision detection packet in a case in which a data packet can be received at the communication device and there is collision of data packets;
Fig. 12 is a flowchart showing the processing routine of "processing of receiving reply packets to data of the communication device";
Fig. 13 is a timing chart for explaining the transmission prohibited period;
Fig. 14 is a flowchart showing the processing routine of "signal receiving processing";
Fig. 15 is a timing chart relating to the transmission prohibited period in a case in which the communication device receives reply packets (collision detection packets);
Fig. 16 is a flowchart showing the processing routine of "reply packet transmitting processing"; and
Fig. 17 is a timing chart for explaining the transmission prohibited period.

### DETAILED DESCRIPTION

Preferred exemplary embodiments of the present invention will be described in detail hereinafter with reference to the drawings.

### [First Exemplary Embodiment]

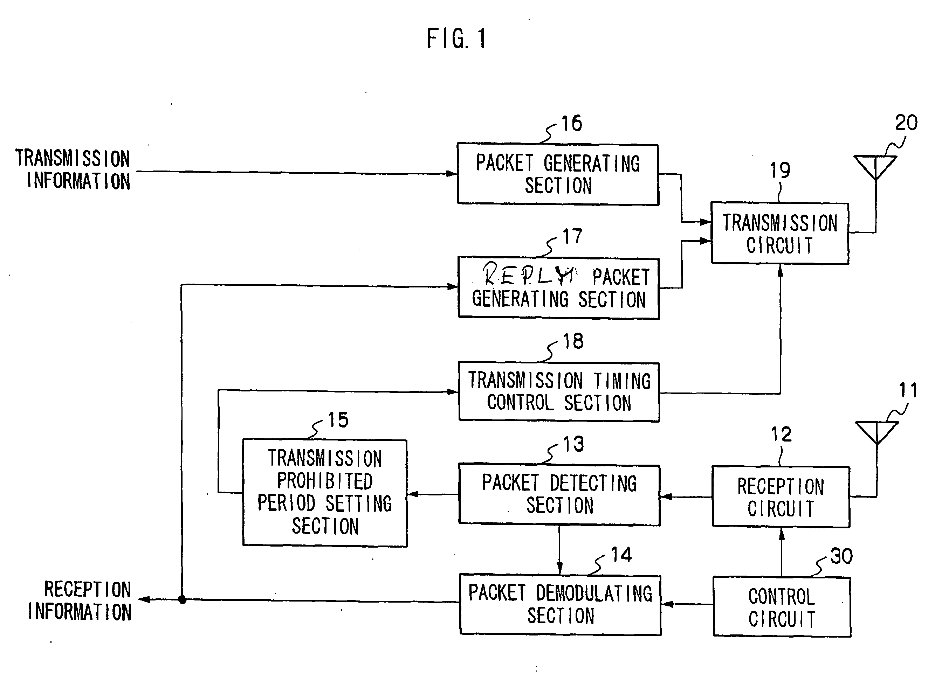

Fig. 1 is a block diagram showing the structure of a communication device of a wireless communications network relating to a first exemplary embodiment of the present invention. The wireless communications network is structured dynamically by respective communication devices broadcasting packets respectively. Hereinafter, as needed, communication devices at the periphery of the communication device will be called peripheral terminals or other terminals.

The communication device includes: a reception circuit 12 that, via a reception antenna 11, receives packets transmitted by other wireless terminal devices; a packet detecting section 13 detecting a received packet, and detecting in which slot (at what timing) the packet was transmitted-in; a packet demodulating section 14 demodulating the data that is transmitted-in from the detected packet, and generating reception information; and a transmission prohibited period setting section 15 setting a transmission prohibited period on the basis of timing information of the detected packet.

The communication device further includes: a packet generating section 16 generating a packet on the basis of transmission information; a reply packet generating section 17 generating a reply packet on the basis of a demodulated packet; a transmission timing control section 18 controlling the transmission timing; a transmission circuit 19 transmitting a generated packet via an antenna 20; and a control circuit 30 controlling overall operation.

On the basis of the packet that is demodulated at the packet demodulating section 14, the reply packet generating section 17 judges whether the packet has been detected correctly, and, only in cases in which a packet is detected correctly, generates a reply packet that expresses that the packet has been detected correctly. In this way, in the present exemplary embodiment, the reply packet generating section 17 generates one type of reply packet.

The transmission timing control section 18 controls the respective transmission timings of the data packet generated at the packet generating section 16 and the reply packet generated at the reply packet generating section 17, with respect to the transmission circuit 19. For the reply packet in particular, the transmission timing control section 18 controls the transmission circuit 19 such that the reply packet is certainly transmitted after a predetermined time period from the completion of reception of a data packet. Note that the aforementioned predetermined time period is common for all terminals. Accordingly, in a case in which numerous terminals are densely concentrated at the periphery, reply packets from respective terminals collide. Although details thereof will be described later, this is utilized in causing the reply packets to collide purposely so as to detect hidden terminals, or the like.

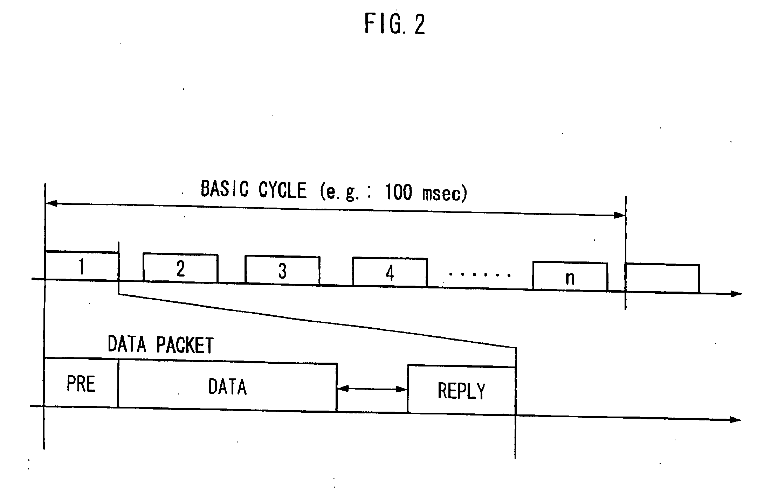

Fig. 2 is a drawing showing the structure of the basic cycle that is transmitted and received by n communication devices. A combination of a single transmission/reception of a data packet and a reply packet is illustrated. The one basic cycle is set to, for example, 100 msec, and, in Fig. 2, there are n combinations.

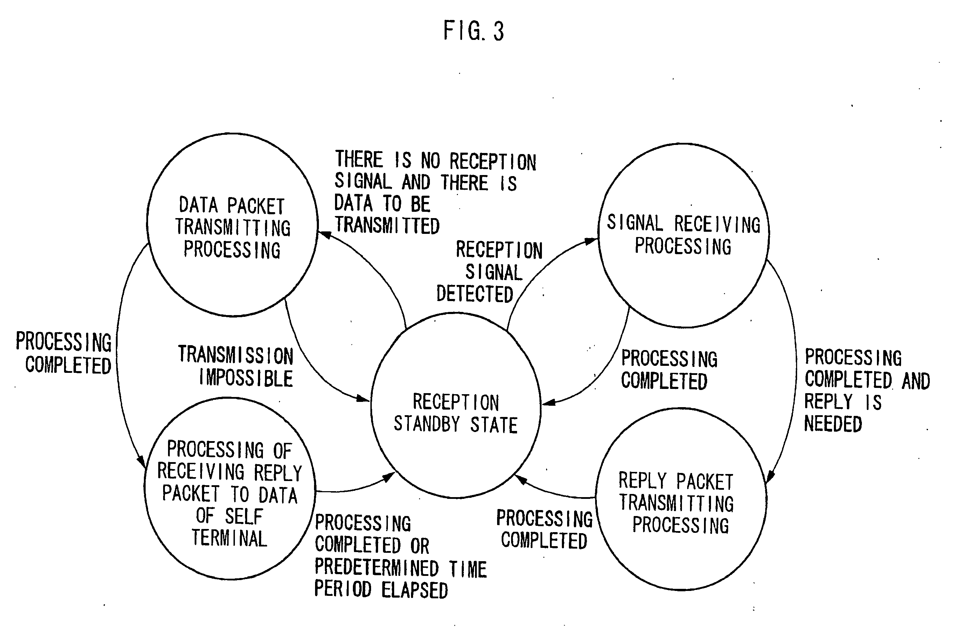

Fig. 3 is a state transition drawing of the present communication device. The communication device transitions through respective states that are a "reception standby state", "data packet transmitting processing", "processing of receiving reply packets to data of the communication device", "signal receiving processing", and "reply packet transmitting processing".

Specifically, in the reception standby state, if there is no reception signal and there is data to be transmitted, the communication device moves on to the data packet transmitting processing, whereas, if a reception signal is detected, the communication device moves on to the signal receiving processing.

In the data packet transmitting processing, when a data packet cannot be transmitted, the communication device moves on to the reception standby state, whereas, when the data packet transmitting processing is completed, the communication device moves on to the processing of receiving reply packets to data of the communication device. Further, in the processing of receiving reply packets to data of the communication device, the communication device moves on to the reception standby state when the processing is completed or when a predetermined time period has elapsed.

On the other hand, in the signal receiving processing, when the processing is completed, the communication device moves on to the reception standby state, whereas, when the processing is completed and a reply packet must be transmitted, the communication device moves on to the reply packet transmitting processing. Further, in the reply packet transmitting processing, the communication device moves on to the reception standby state when the processing is completed. Hereinafter, the data packet transmitting processing, the data packet transmitting processing of the communication device, the signal receiving processing, and the reply packet transmitting processing will be respectively described.

In the reception standby state, when there is no reception signal and there is data to be transmitted, the communication device moves on to the data packet transmitting processing, and executes the following processing.

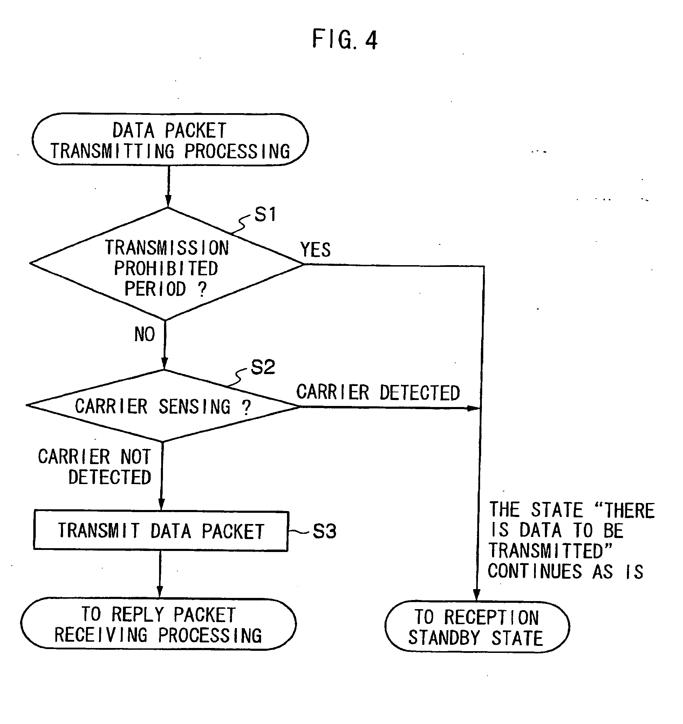

Fig. 4 is a flowchart showing the processing routine of the "data packet transmitting processing". In step S1, the transmission timing control section 18 judges whether the current timing is the transmission prohibited period that was set at the transmission prohibited period setting section 15. If this judgment is affirmative, the routine moves on to the reception standby state while the state that "there is data to be transmitted" continues. If the judgment is negative, the routine proceeds to step S2.

In step S2, on the basis of the results of detection of the reception circuit 12 or the packet detecting section 13, the transmission timing control section 18 measures the reception sensitivity of each slot, and judges whether or not a carrier is detected. If the judgment is affirmative, the routine moves on to the reception standby state while the state that "there is data to be transmitted" continues. If the judgment is negative, the routine moves on to step S3.

In step S3, the transmission timing control section 18 controls the transmission circuit 19 to transmit the data packet generated at the packet generating section 16, and the present routine ends. The data packet is thereby transmitted to respective terminals via the antenna 20. Then, the communication device moves on to the processing of receiving reply packets to data of the communication device.

Note that, if the conditions that it is not the transmission prohibited period (a negative judgment in step S1) and a carrier is undetected (a negative judgment in step S2) are not satisfied, there is a state in which "there is data to be transmitted", but the communication device is coming and going between the "reception standby state" and the "data packet transmitting processing". In this case, when the time to transmit the next data packet arrives, the previous data to be transmitted is discarded, and processing for transmitting the new data is carried out.

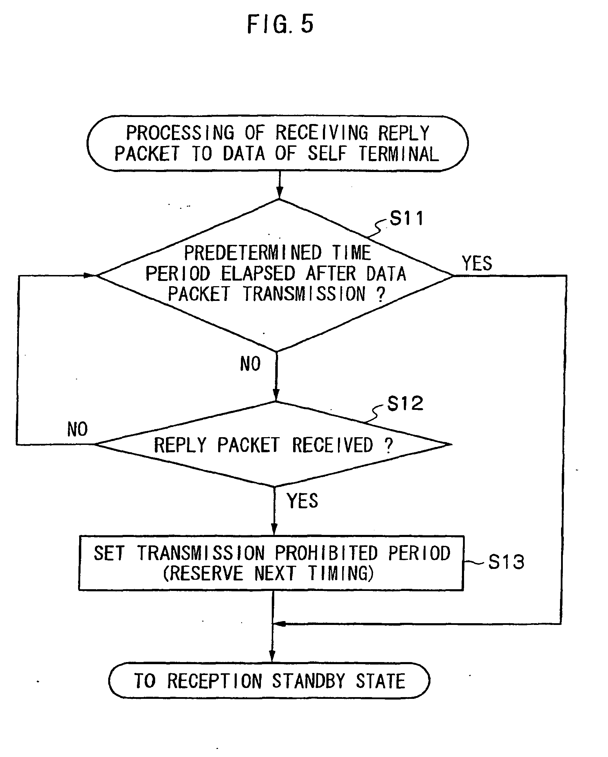

Fig. 5 is a flowchart showing the processing routine of the "processing of receiving reply packets to data of the communication device". In step S11, the transmission timing control section 18 judges whether a predetermined time period has elapsed from after the transmitting of the data packet in above-described step S3. If the judgment is affirmative, the present routine ends, and the communication device moves on to the reception standby state. If the judgment is negative, the routine proceeds to step S12.

In step S 12, the packet receiving section 13 judges whether reply packets to the data of the communication device are received from all of the peripheral terminals. If the judgment is affirmative, the routine proceeds to step S13, and if the judgment is negative, the routine returns to step S11. Note that, if any reply packets are received within a predetermined time period after transmission of the data packet of the communication device, it is considered to be reply packets to the communication device. If any reply packets are received in a time period other than this, it is considered to be reply packets to a hidden terminal.

In step S 13, the transmission prohibited period setting section 15 sets a transmission prohibited period, in order to reserve the transmission timing for the next time.

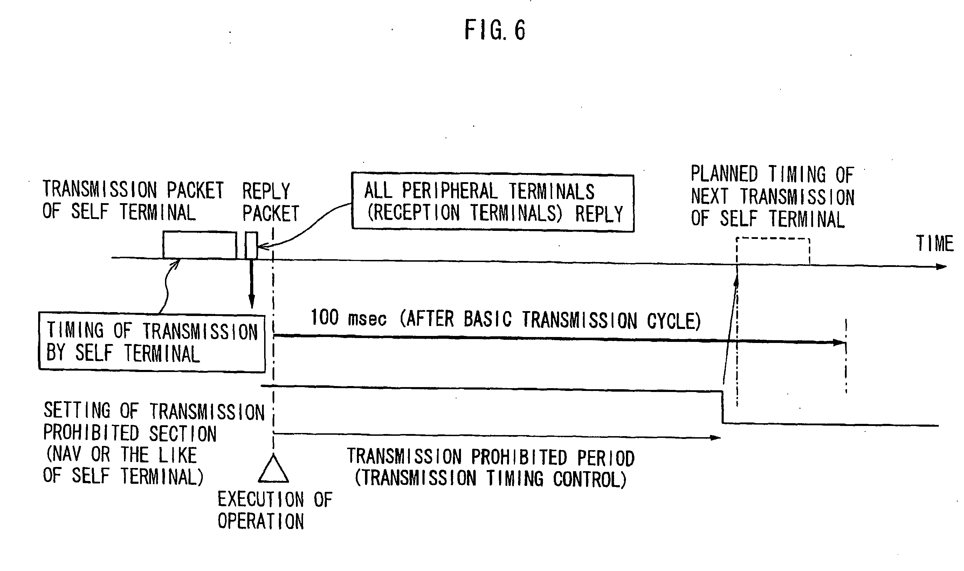

Fig. 6 is a timing chart for explaining the transmission prohibited period. Here, after the communication device transmits a data packet, each of the peripheral terminals transmits a reply packet to that data packet.

At this time, when the transmission prohibited period setting section 15 receives, from all of the peripheral terminals, reply packets to the data packet of the communication device, the transmission prohibited period setting section 15 sets 100 msec after the transmission timing of the data packet of the communication device as the planned timing for the next transmission of the communication device, and sets the time period from the current timing to before the planned timing for the next transmission as the transmission prohibited period, and the present routine ends. The planned timing for the next transmission of the communication device is thereby reserved. Then, the communication device moves on to the reception standby state.

Further, in the "reception standby state", if a reception signal is detected, the communication device moves on to the "signal receiving processing" and executes the following processing.

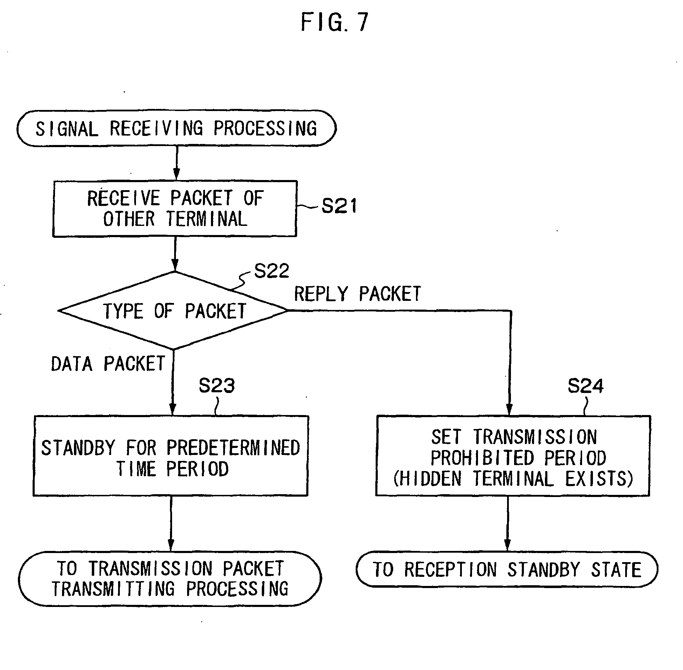

Fig. 7 is a flowchart showing the processing routine of the "signal receiving processing". In step S21, the reception circuit 12 shown in Fig. 1 receives packets from other terminals (peripheral terminals), the packet detecting section 13 detects these packets, and the routine moves on to step S22.

In step S22, the transmission prohibited period setting section 15 judges the type of each packet detected at the packet detecting section 13. If the packet is a data packet, the routine proceeds to step S23, and if the packet is a reply packet, the routine proceeds to step S24.

In step S23, the transmission prohibited period setting section 15 stands-by for a predetermined time period, the present routine ends, and the communication device moves on to the reply packet transmitting processing.

Further, in step S24, because there is a state in which reply packets, that are not replies to a data packet of the communication device, have been detected, it is understood that a hidden terminal exists. Thus, the transmission prohibited period setting section 15 sets the transmission prohibited period as follows.

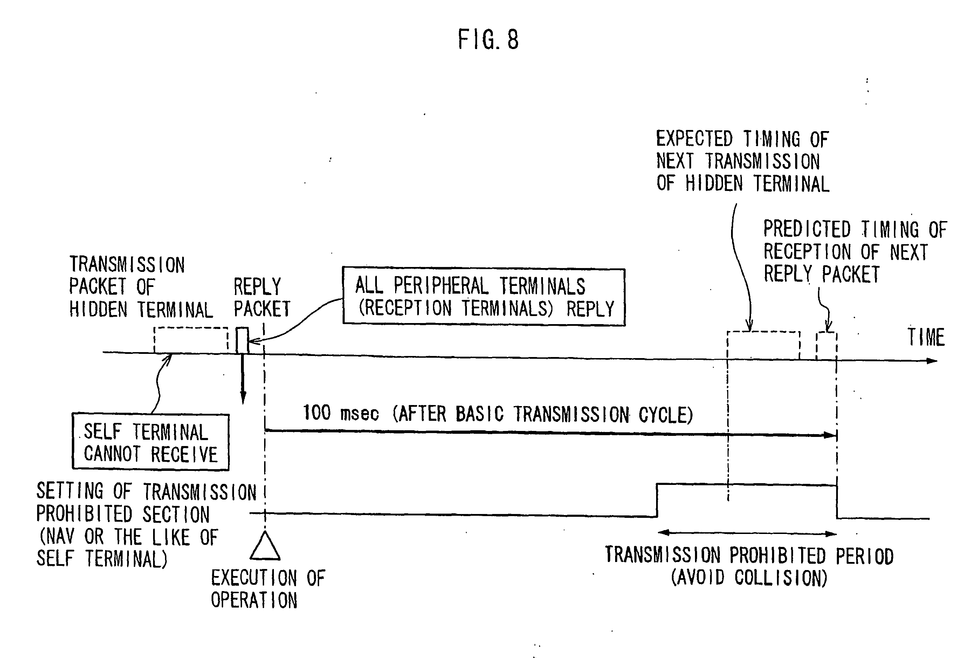

Fig. 8 is a timing chart for explaining the transmission prohibited period. Here, the transmission packet of the hidden terminal (a terminal that is detected at peripheral terminals but is not detected at the communication device) is transmitted each basic transmission cycle (e.g., every 100 msec), but is not detected at the communication device. Further, reply packets of the peripheral terminals are detected at the communication device.

When a reply packet is detected, the transmission prohibited period setting section 15 predicts 100 msec after the detection timing of the reply packet to be the reception timing of the next reply packet, and sets the time period from this predicted timing until a time that is a predetermined time period therebefore as the transmission prohibited period.

There is the possibility that the aforementioned reply packet is a reply packet that a peripheral terminal has transmitted after receiving a data packet transmitted from a hidden terminal. Thus, on the basis of the detection timing of the reply packets, the transmission prohibited period setting section 15 sets the time period, in which there is the possibility that a hidden terminal will transmit a next data packet, as the transmission prohibited period. Then, after the setting of the transmission prohibited period, the present routine ends and the communication device moves on to the reception standby state.

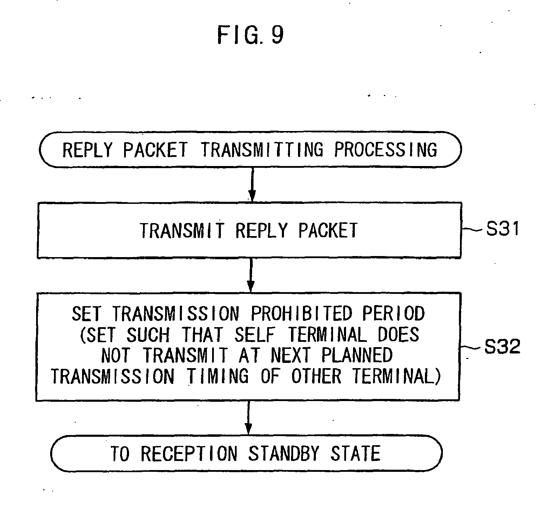

Fig. 9 is a flowchart showing the processing routine of the "reply packet transmitting processing". In step S31, the transmission timing control section 18 controls the transmission circuit 19 so as to transmit a reply packet after a predetermined time period from the completion of reception of a data packet, and the routine proceeds to step S32. Due thereto, when a data packet is received correctly, a reply packet is certainly transmitted after a predetermined time period elapses from the completion of reception.

In step S32, the transmission prohibited period setting section 15 sets the transmission prohibited period such that the communication device does not transmit at the planned timing of the next transmission of another terminal.

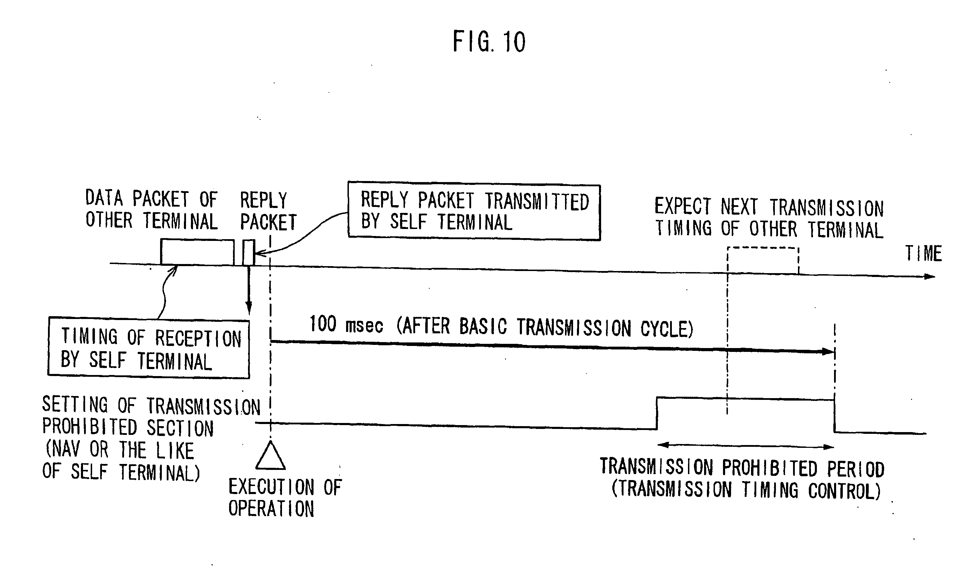

Fig. 10 is a timing chart for explaining the transmission prohibited period. Here, in order for the communication device to not transmit at the planned timing of the next transmission of another terminal, the transmission prohibited period setting section 15 sets, as the transmission prohibited period, a time period that is expected to be the next transmission timing. Specifically, the transmission prohibited period setting section 15 sets a transmission prohibited period whose period end is 100 msec (the basic transmission cycle) from after the communication device transmits the reply packet, and whose period start is a predetermined time before this period end. In this way, the next transmission timing of another terminal is included within the transmission prohibited period, and the communication device can be prevented from transmitting a data packet at the next transmission timing of another terminal. Then, when the setting of the transmission prohibited period ends, the present routine ends and the communication device moves on to the reception standby state.

As described above, when the communication device relating to the first exemplary embodiment receives a reply packet that is a reply to a data packet of the communication device, a time that is a basic transmission cycle after the transmission timing of the data packet of the communication device is set to be the next planned transmission timing of the communication device, and the time period from the current timing until before the next planned transmission timing is set as the transmission prohibited period. Due thereto, the communication device reserves the next planned transmission timing of the communication device, and can reliably transmit the data packet at that timing.

Further, when the communication device receives a reply packet that is not reply to a data packet of the communication device, on the basis of the reception timing of this reply packet, the communication device sets a time period, in which it is presumed that a hidden terminal will transmit a next data packet, as the transmission prohibited period, and transmits the data packet of the communication device at a timing that is other than this transmission prohibited period. The communication device can thereby avoid collision of packets with hidden terminals.

### [Second Exemplary Embodiment]

The communication device relating to the first exemplary embodiment uses one type of reply packet, but a communication device relating to a second exemplary embodiment uses two types of reply packets. One (called a "reception detection packet" hereinafter) is, in the same way as the first exemplary embodiment, the reply packet that expresses that a packet has been received and has been detected correctly. The other one (called a "collision detection packet" hereinafter) is a reply packet expressing that it has been detected that packets are colliding at the same timing.

Accordingly, the reply packet generating section 17 shown in Fig. 1 not only generates reception detection packets in the same way as in the first exemplary embodiment, but also, when data packets are detected at the communication device, generates a collision detection packet.

In the present exemplary embodiment, the packet time lengths of the reception detection packet and the collision detection packet are different. For example, the time length of the reception detection packet is shorter than that of the collision detection packet.

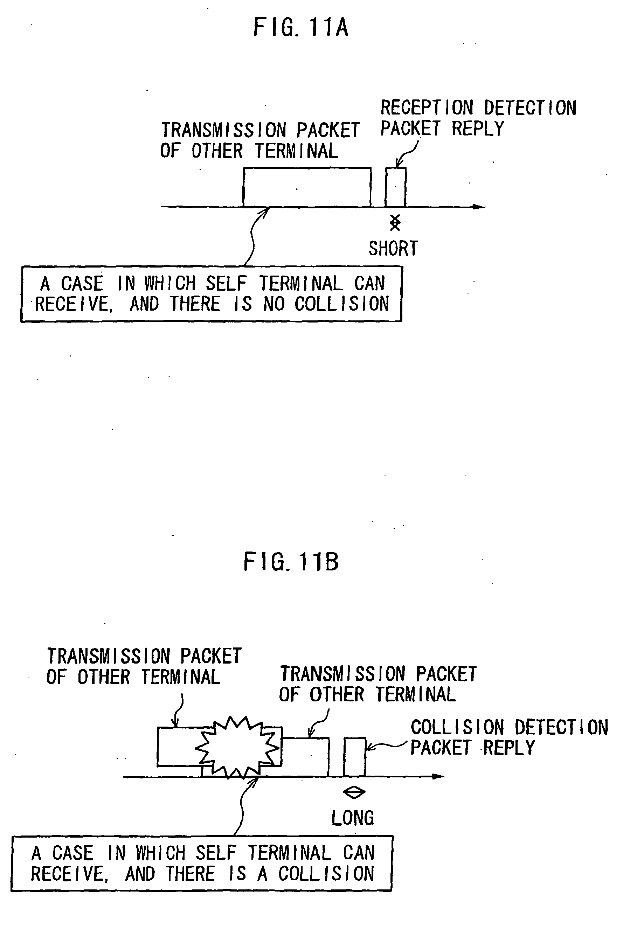

Fig. 11A is a drawing showing detection information of a reception detection packet and a collision detection packet in a case in which a data packet of another terminal can be received at the communication device and there is no collision of data packets. Fig. 11B is a drawing showing detection information of a reception detection packet and a collision detection packet in a case in which a data packet can be received at the communication device and there is collision of data packets.

Each terminal replies with a reception detection packet when receiving only one data packet (Fig. 11A), and replies with a collision detection packet when receiving plural data packets (Fig. 11B).

At each terminal, on the basis of the time period over which the reception electric power of the reply packets continues, the terminal receives only reception detection packets when the continuation time is shorter than a predetermined value. When the continuation time is longer than the predetermined value, the terminal can differentiate that only collision detection packets have been received, or both reception detection packets and collision detection packets have been received.

Further, each terminal may use two reply packets in which the combination of the subcarriers that are used is changed. Due thereto, the terminal can, in accordance with the combination of subcarriers that are used, differentiate whether or not two or more types of reply packets are included. Moreover, each terminal may transmit a reply packet plural times, or may use a spread spectrum signal as a reply packet. In this way, the forms of the plural types of reply packets are not particularly limited.

In addition, the following respective processings in the "processing of receiving reply packets to data of the communication device", "signal receiving processing" and "reply packet transmitting processing", that are shown in Fig. 3, are carried out in the second exemplary embodiment.

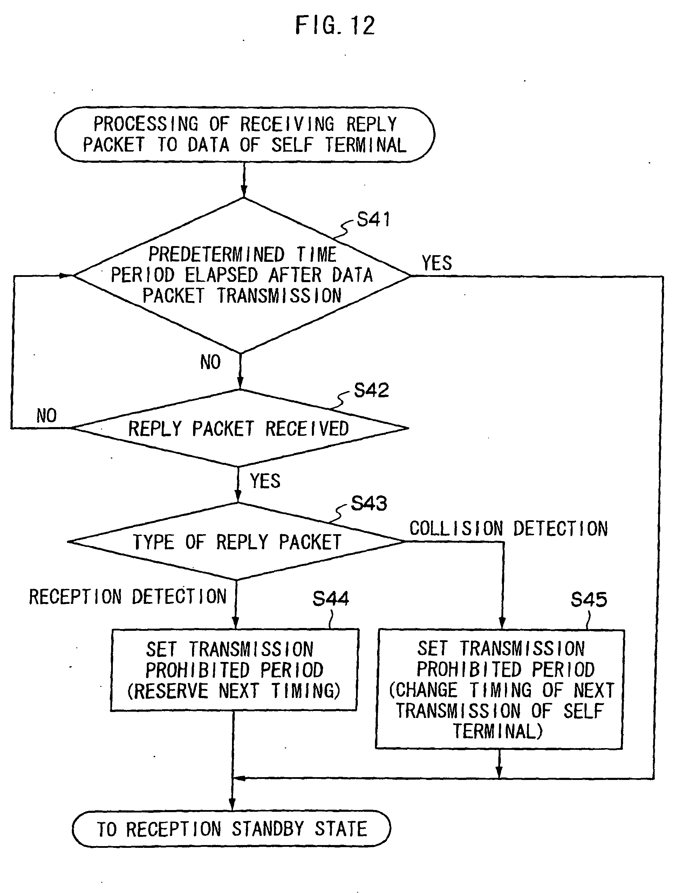

Fig. 12 is a flowchart showing the processing routine of the "processing of receiving reply packets to data of the communication device". Here, steps S41, S42 are the same processings as steps S11, S12 shown in Fig. 5. Then, if the judgment in step S42 is affirmative, the routine proceeds to step S43.

In step S43, the transmission prohibited period setting section 15 judges the type of each reply packet detected at the packet detecting section 13 (reception detection packet or collision detection packet). If the reply packet is a reception detection packet, the routine proceeds to step S44. If the reply packet is a collision detection packet, the routine proceeds to step S45.

In step S44, in the same way as step S13 shown in Fig. 5, the transmission prohibited period setting section 15 sets the transmission prohibited period in order to reserve the transmission timing of the next time, and the present routine ends, and the communication device moves on to the reception standby state.

Further, in step S45, the transmission timing control section 18 sets the transmission prohibited period in order to change the transmission timing of the next time of the communication device.

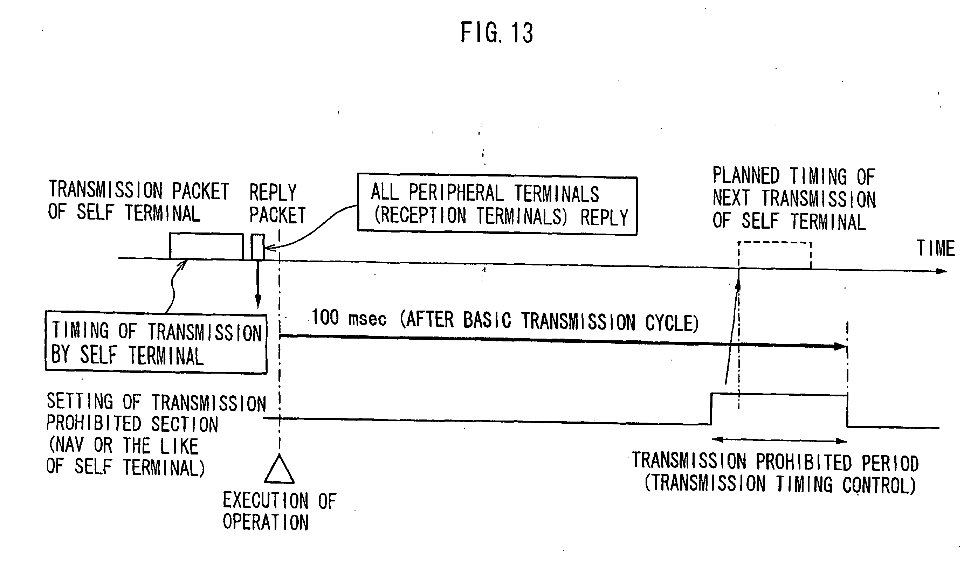

Fig. 13 is a timing chart for explaining the transmission prohibited period. Here, after the communication device transmits a data packet, all (or some) of the peripheral terminals transmit reply packets (collision detection packets) with respect to this data packet.

Specifically, the transmission prohibited period setting section 15 sets, as the transmission prohibited period, a predetermined time period that includes the next planned transmission timing of the communication device that is 100 msec after the transmission timing of the data packet of the communication device. Due thereto, the next planned transmission timing of the communication device is changed as compared with that of the previous time. Then, when the transmission prohibited period is set, the present routine ends, and the communication device moves on to the reception standby state.

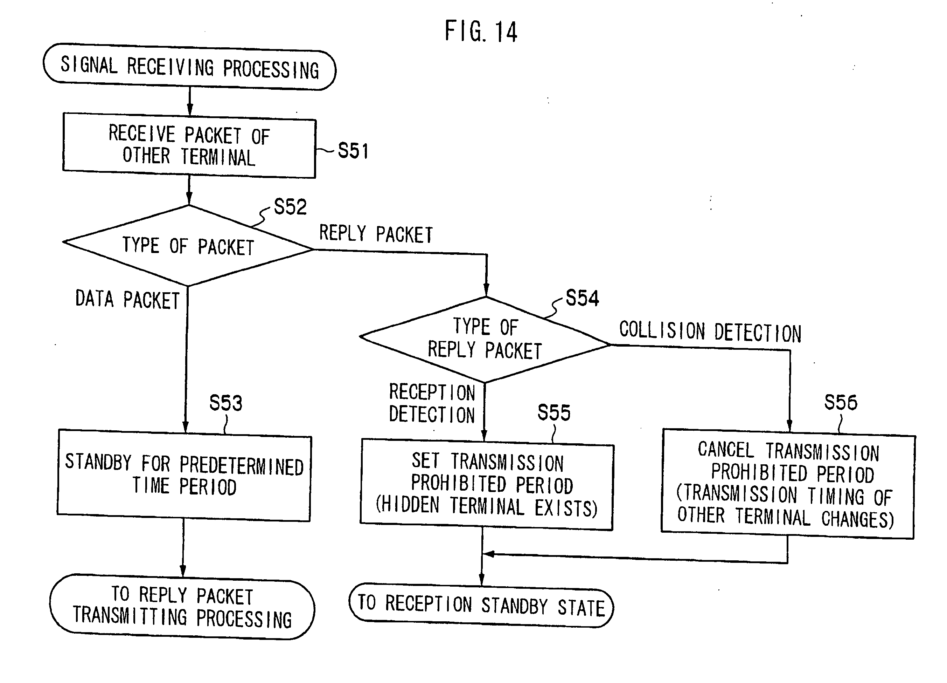

Fig. 14 is a flowchart showing the processing routine of the "signal receiving processing". Here, steps S51 through S53 are the same processings as steps S21 through S23 shown in Fig. 7. Then, in step S52, if the type of the packet is judged to be a reply packet, the routine proceeds to step S54.

In step S54, the transmission prohibited period setting section 15 judges the type (a reception detection packet or a collision detection packet) of each reply packet detected by the packet detecting section 13. If the reply packet is a reception detection packet, the routine proceeds to step S55. If the reply packet is a collision detection packet, the routine proceeds to step S56.

In step S55, in the same way as step S24 shown in Fig. 7, the transmission prohibited period setting section 15 sets the transmission prohibited period in consideration of the existence of a hidden terminal. The present routine ends, and the communication device moves on to the reception standby state.

Further, in step S56, the transmission prohibited period setting section 15 predicts that the transmission timing of the other terminal is changed, and cancels the transmission prohibited period. It is assumed here that the collision of a data packet of a hidden terminal (a terminal that is detected at the peripheral terminals but not detected at the communication device) has arisen, and the peripheral terminal that has detected this is transmitting the reply packet (the collision detection packet).

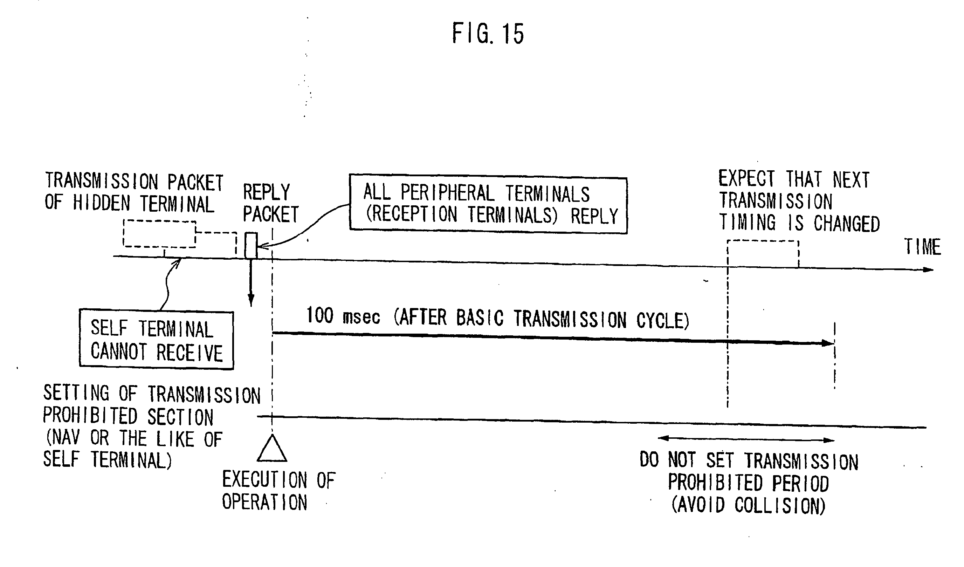

Fig. 15 is a timing chart relating to the transmission prohibited period in a case in which the communication device receives the reply packet (collision detection packet).

At this time, it can be predicted that, in the same way as the communication device, the peripheral terminal that received the collision detection packet (the hidden terminal that caused the collision of packets) will change the transmission timing of the next data packet. Thus, the transmission prohibited period setting section 15 sets the time that is 100 msec after the timing that the reply packet (the collision detection packet) is received as a reference time, and prohibits the period of time, that is from this reference time to a predetermined time therebefore, from being set as a transmission prohibited period. Or, in a case in which the aforementioned time period is already set as the transmission prohibited period, the transmission prohibited period setting section 15 cancels this setting. Then, when the transmission prohibited period is cancelled, the present routine ends, and the communication device moves on to the reception standby state.

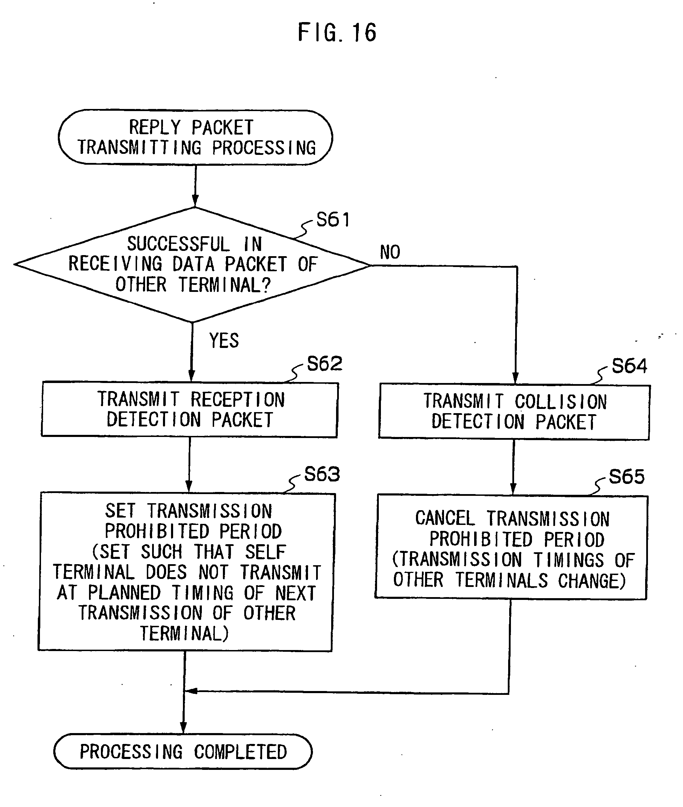

Fig. 16 is a flowchart showing the processing routine of the "reply packet transmitting processing".

In step S61 on the basis of the packet that is demodulated at the packet demodulating section 14, the reply packet generating section I7 shown in Fig. 1 judges whether or not reception of the data packet is successful. If reception is successful, the routine proceeds to step S62, whereas if reception is not successful, the routine proceeds to step S64.

In step S62, the reply packet generating section 17 generates a reception detection packet. Then, the transmission timing control section 18 controls the transmission circuit 19 so as to transmit the reception detection packet generated at the reply packet generating section 17, and the routine proceeds to step S63. The reception detection packet is thereby transmitted to the peripheral terminal via the antenna 20.

In step S63, in the same way as step S32 shown in Fig. 9, the transmission prohibited period setting section 15 sets the transmission prohibited period such that the communication device does not transmit at the next transmission timing of the other terminal.

On the other hand, in step S64, the reply packet generating section 17 generates a collision detection packet. The transmission timing control section 18 controls the transmission circuit 19 to transmit the collision detection packet generated at the reply packet generating section 17, and the routine proceeds to step S65. The collision detection packet is thereby transmitted to the peripheral terminal via the antenna 20.

In step S65, the transmission prohibited period setting section 15 cancels the transmission prohibited period in consideration of the fact that the transmission timings of the other terminals are changed, and the present routine ends.

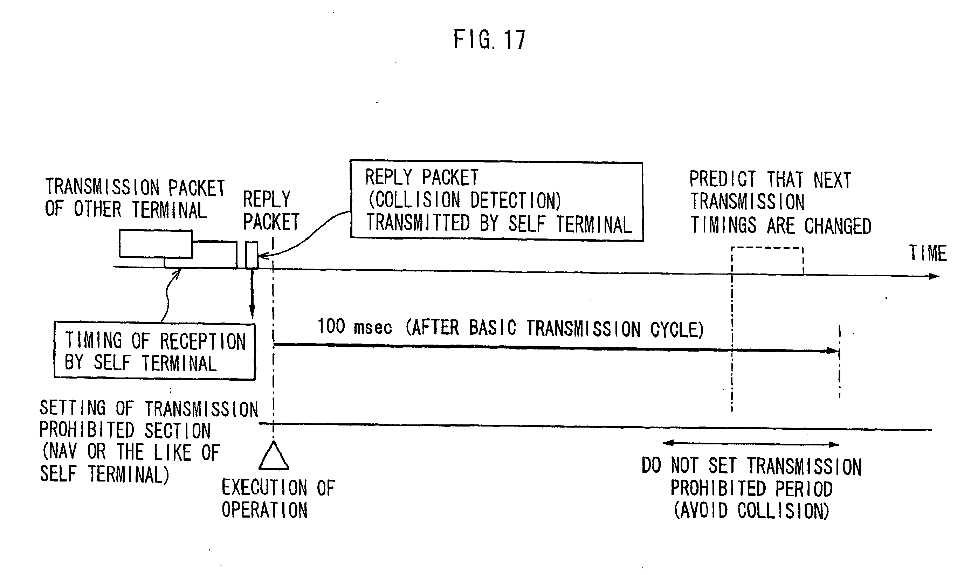

Fig. 17 is a timing chart for explaining the aforementioned transmission prohibited period. Here, the communication device receives transmission packets (data packets) from plural other terminals at the same timing, and the communication device transmits a reply packet (collision detection packet). Namely, the data of the peripheral terminals are colliding. At this time, it can be predicted that, when the respective peripheral terminals detect the collision detection packet from the communication device, the respective peripheral terminals will change the transmission timings of the data packets.

Thus, the transmission prohibited period setting section 15 sets the time that is 100 msec after the transmission timing of the reply packet (the collision detection packet) of the communication device as a reference time, and prohibits the period of time, that is from this reference time to a predetermined time therebefore, from being set as a transmission prohibited period. Or, in a case in which the aforementioned time period is already set as the transmission prohibited period, the transmission prohibited period setting section 15 cancels this setting. Then, when the transmission prohibited period is cancelled, the present routine ends, and the communication device moves on to the reception standby state.

As described above, in the communication device of the second exemplary embodiment, when collision detection packets are the replies to a data packet of the communication device, collision of data packets is arising at the same timing between the communication device and peripheral terminals. Therefore, the transmission prohibited period is set in order to change the next planned transmission timing of a data packet of the communication device.

Further, in the above-described communication device, when collision detection packets are not replies to a data packet of the communication device, a collision of data packets between respective hidden terminals is arising. However, because it is thought that these hidden terminals will change the transmission timings of the data packets, the setting of the transmission prohibited period is cancelled.

In this way, regardless of whether there is a hidden terminal or not, the communication device suppresses the collision of data packets, and changes or prohibits changing of the transmission timing. Due thereto, slots are utilized efficiently, and the communication performance can be improved.

Note that the present invention is not limited to the above-described exemplary embodiments, and can of course be applied as well to structures to which changes in terms of design have been made within the scope of the claims.

In accordance with the communication device, collision of packets is suppressed, and the communication performance can be improved.

In accordance with the communication device, the collision of a packet that is transmitted from a terminal that cannot be detected can be suppressed.

In accordance with the communication device, a data packet can be transmitted at a timing at which collision of packets docs not arise.

In accordance with the communication device, by using plural reply packets, data packet transmission that corresponds to the reception status can be carried out.

In accordance with the communication device, a data packet can be transmitted with the transmission timing being changed such that a collision of data packets does not arise.

In accordance with the communication device, a data packet can be transmitted while unnecessary changing of the transmission timing is suppressed.

## Claims

1. A communication device comprising:
receiving means (12) for receiving a data packet and reply packets that are transmitted from other terminals;
transmitting means (19) for, when the data packet is detected by the receiving means (12), transmitting, after a predetermined time period, a reply packet expressing results of detection of the data packet received from one of the other terminals;
transmission prohibited period setting means (15) for, when the reply packets are received by the receiving means (12), setting as a transmission timing prohibited period of a data packet of the communication device itself, a predetermined period from a reception timing of the reply packets that are received to an end of the predetermined period after a basic transmission cycle of the communication device itself passes; and
said transmitting means (19) for transmitting a data packet of the communication device itself, at a timing other than the transmission timing prohibited period set by the transmission prohibited period setting means (15).

2. The communication device of claim 1, wherein, when the reply packets received by the receiving means are not replies to the data packet of the communication device, the transmission prohibited period setting means (15) is adapted for setting the transmission timing prohibited of a data packet.

3. The communication device of claim 2, wherein, when the reply packets received by the receiving means are replies to the data packet of the communication device, the transmission prohibited period setting means (15) is adapted for determining a transmission timing of a data packet of the communication device, and for setting, as the transmission timing prohibited period, a time period that does not include the transmission timing.

4. The communication device of claim 1, wherein
The receiving means (12) is adapted for receiving, as the reply packet, reception detection packets expressing that a data packet is received correctly, or collision detection packets expressing that collision of data packets is detected, and
the transmission prohibited period setting means (15) is adapted for setting a transmission prohibited period on the basis of whether the reply packets are reception detection packets or collision detection packets.

5. The communication device of claim 4, wherein, when collision detection packets received by the receiving means are replies to a data packet of the communication device, the transmission prohibited period setting means (15) is adapted for setting the transmission timing prohibited period of a data packet so as to change a transmission timing of a next data packet of the communication device.

6. The communication device of claim 4, wherein, when collision detection packets received by the receiving means (12) are not replies to a data packet of the communication device, the transmission prohibited period setting means (15) is adapted for prohibiting setting of a transmission timing prohibited period, or for cancelling setting of a transmission prohibited period that is already set.

## Patentansprüche

1. Kommunikationsvorrichtung, mit
einem Empfangsmittel (12) zum Empfangen eines Datenpakets und von Antwortpaketen, die von anderen Endgeräten übertragen werden;
einem Sendemittel (19) zum, wenn das Datenpaket durch das Empfangsmittel (12) detektiert wird, Senden eines Antwortpakets, das Ergebnisse der Detektion des Datenpakets, das von einem der anderen Endgeräte empfangen wird, ausdrückt, nach einer vorbestimmten Zeitperiode;
einem Sendeverbotsperiodeneinstellungsmittel (15) zum, wenn die Antwortpakete von dem Empfangsmittel (12) empfangen werden, Setzen einer vorbestimmten Periode von einer Empfangszeitgebung der Antwortpakete, die empfangen werden, bis zu einem Ende der vorbestimmten Periode, nachdem ein Basissendezyklus der Kommunikationsvorrichtung selbst verstrichen ist, als eine Sendezeitgebungsverbotsperiode eines Datenpakets der Kommunikationsvorrichtung selbst; und
dem Sendemittel (19) zum Senden eines Datenpakets der Kommunikationsvorrichtung selbst, bei einer Zeitgebung, die eine andere ist als die Sendezeitgebungsverbotsperiode, die durch das Sendeverbotsperiodeneinstellungsmittel (15) gesetzt worden ist.

2. Kommunikationsvorrichtung nach Anspruch 1, bei der, wenn die Antwortpakete, die von dem Empfangsmittel empfangen werden, keine Antworten auf das Datenpaket der Kommunikationsvorrichtung sind, das Sendeverbotseinstellungsmittel (15) angepasst ist zum Setzen der Sendezeitgebung, die für ein Datenpaket verboten ist.

3. Kommunikationsvorrichtung nach Anspruch 2, bei der, wenn die Antwortpakete, die von dem Empfangsmittel empfangen werden, Antworten auf das Datenpaket der Kommunikationsvorrichtung sind, das Sendeverbotseinstellungsmittel (15) angepasst ist zum Bestimmen einer Sendezeitgebung eines Datenpakets der Kommunikationsvorrichtung, und zum Setzen einer Zeitgebung, die nicht die Sendezeitgebung enthält, als die Sendezeitgebungsverbotsperiode.

4. Kommunikationsvorrichtung nach Anspruch 1, bei der
das Empfangsmittel (12) angepasst ist zum Empfangen, als das Antwortpaket, von Empfangsdetektionspaketen, die ausdrücken, dass ein Datenpaket korrekt empfangen worden ist, oder von Kollisionsdetektiorispaketen, die ausdrücken, dass ein Kollision der Datenpakete detektiert worden ist, und
das Sendeverbotsperiodeneinstellungsmittel (15) angepasst ist zum Setzen einer Sendeverbotsperiode basierend darauf, ob die Antwortpakete Empfangsdetektionspakete oder Kollisionsdetektionspakete sind.

5. Kommunikationsvorrichtung nach Anspruch 4, bei der, wenn Kollisionsdetektionspakete, die von dem Empfangsmittel empfangen werden, Antworten auf ein Datenpaket der Kommunikationsvorrichtung sind, das Sendeverbotsperiodeneinstellungsmittel (15) angepasst ist zum Setzen der Sendezeitgebungsverbotsperiode eines Datenpakets, um eine Sendezeitgebung eines nächsten Datenpakets der Kommunikationsvorrichtung zu ändern.

6. Kommunikationsvorrichtung nach Anspruch 4, bei der, wenn die Kollisionsdetektionspakete, die von dem Empfangsmittel (12) empfangen werden, keine Antworten auf ein Datenpaket der Kommunikationsvorrichtung sind, das Sendeverbotsperiodeneinstellungsmittel (115) angepasst ist zum Verhindern eines Setzens einer Sendezeitgebungsverbotsperiode, oder zum Aufheben des Setzens einer bereits gesetzten Sendeverbotsperiode.

## Revendications

1. Dispositif de communication, comprenant :
des moyens de réception (12) pour recevoir un paquet de données et des paquets de réponses qui sont transmis d'autres terminaux ;
des moyens de transmission (19) pour transmettre, lorsque le paquet de données est détecté par les moyens de réception (12), après une période de temps prédéterminée, un paquet de réponses exprimant les résultats de la détection du paquet de données reçu de l'un des autres terminaux ;
des moyens de réglage de période de transmission interdite (15) pour régler, lorsque les paquets de réponses sont reçus par les moyens de réception (12), comme période interdite de synchronisation de transmission d'un paquet de données du dispositif de communication lui-même, une période prédéterminée d'une synchronisation de réception des paquets de réponses qui sont reçus à la fin de la période prédéterminée après écoulement d'un cycle de transmission basique du dispositif de communication lui-même ; et
lesdits moyens de transmission (19) pour transmettre un paquet de données du dispositif de communication lui-même, avec une synchronisation autre que la période de synchronisation de transmission interdite réglée par les moyens de réglage de période de transmission interdite (15).

2. Dispositif de communication selon la revendication 1, dans lequel, lorsque les paquets de réponses reçus par les moyens de réception ne sont pas des réponses au paquet de données du dispositif de communication, le moyen de réglage de période de transmission interdite (15) est adapté pour régler la synchronisation de transmission interdite d'un paquet de données.

3. Dispositif de communication selon la revendication 2, dans lequel, lorsque les paquets de réponses reçus par les moyens de réception sont des réponses au paquet de données du dispositif de communication, le moyen de réglage de période de transmission interdite (15) est adapté pour déterminer une synchronisation de transmission d'un paquet de données du dispositif de communication et régler, comme période de synchronisation de transmission interdite, une période de temps qui ne comprend pas la synchronisation de transmission.

4. Dispositif de communication selon la revendication 1, dans lequel :
le moyen de réception (12) est adapté pour recevoir, comme paquet de réponses, des paquets de détection de réception exprimant le fait qu'un paquet de données est reçu correctement, ou des paquets de détection de collision exprimant le fait qu'une collision de paquets de données est détectée, et
le moyen de réglage de période de transmission interdite (15) est adapté pour régler une période de transmission interdite sur la base à savoir si les paquets de réponses sont des paquets de détection de réception ou des paquets de détection de collision.

5. Dispositif de communication selon la revendication 4, dans lequel, lorsque des paquets de détection de collision reçus par le moyen de réception sont des réponses à un paquet de données du dispositif de communication, le moyen de réglage de période de transmission interdite (15) est adapté pour régler la période de synchronisation de transmission interdite d'un paquet de données afin de modifier une synchronisation de transmission d'un paquet de données suivant du dispositif de communication.

6. Dispositif de communication selon la revendication 4, dans lequel, lorsque des paquets de détection reçus par le moyen de réception (12) ne sont pas des réponses à un paquet de données du dispositif de communication, le moyen de réglage de période de transmission interdite (15) est adapté pour interdire le réglage d'une période de synchronisation de transmission interdite ou annuler le réglage d'une période de transmission interdite qui est déjà réglée.
